# EUROPÄISCHE PATENTANMELDUNG

(11) **EP 0 992 197 A1**
(43) Veröffentlichungstag der Anmeldung: **12.04.2000**
(21) Anmeldenummer: 98118208.2
(22) Anmeldetag: 25.09.1998
(51) Int. Cl.: A23L 1/01, A23L 1/32

(54) **Verfahren zum Garen von Eiern**

(71) Anmelder: GNT Gesellschaft für Nahrungsmitteltechnologie mbH, 52072 Aachen (DE)
(72) Erfinder: Hoeck, Horst, Dr.-Ing., 52074 Aachen (DE)
(74) Vertreter: Albrecht, Rainer Harald, Dr.-Ing.

(57) **Zusammenfassung**

Verfahren zum Garen von Eiern. Erfindungsgemäß wird ein rohes Ei (1) im elektromagnetischen Wechselfeld einer Spulenanordnung (3), die mindestens eine an einen Hochfrequenzgenerator (2) angeschlossene Feldspule (4) aufweist, induktiv erhitzt, wobei mit der von außen nach innen abnehmenden Stromdichteverteilung des im Ei (1) induzierten Heizstromes eine durch Erhitzung verfestigte Hülle aus Eiweiß und ein erwärmter, noch weitgehend unverfestigter Kern aus Eigelb erzeugt wird.

## Beschreibung

Die Erfindung betrifft ein Verfahren zum Garen von Eiern.

Im Rahmen der bekannten Maßnahmen werden Eier im Wasserbad oder mit Dampf erhitzt, wobei die Garzeit je nach Größe der Eier und dem gewünschten Härtegrad zwischen 5 und 10 Minuten beträgt. In der Praxis ist es schwierig, die Garzeit so einzustellen, daß das Eiweiß des gekochten Eies eine das Eigelb umgebende feste Hülle bildet, während das Eigelb noch weitgehend unverfestigt ist. Bei einer etwas zu langen Garzeit kommt es zu einer unerwünschten Verfestigung des Eigelbes. Ist die Garzeit zu kurz, bleibt das Eiweiß weitgehend flüssig, was ebenfalls als störend empfunden wird.

In der Gastronomie ist es üblich, im Wasserbad oder in einem Dampfbehälter Eier vorzukochen und diese bis zum Verzehr zu wärmen. Der organisatorische Ablauf in einer Großküche bringt es mit sich, daß die optimale Garzeit oft nicht exakt eingehalten wird und das Eigelb zu fest wird oder das Eiweiß zu flüssig bleibt. Hinzu kommt, daß die gegarten Eier bis zum Verzehr abkühlen. Die in der Gastronomie dargereichten Frühstückseier erfüllen Qualitätsanforderungen eines anspruchsvollen Gastes oft nicht.

Der Erfindung liegt die Aufgabe zugrunde, ein für die Gastronomie geeignetes Verfahren anzugeben, mit dem Hühnereier in kürzester Zeit und mit reproduzierbaren Eigenschaften so gegart werden können, daß das Eigelb nicht oder nur wenig verfestigt ist und das Eiweiß eine feste Außenhülle um das Eigelb bildet. Das Verfahren soll ferner automatentauglich sein, so daß der Gast sich mit Hilfe eines Gerätes, das nach dem erfindungsgemäßen Verfahren arbeitet, innerhalb kürzester Zeit ein Frühstücksei mühelos frisch zubereiten kann.

Gegenstand der Erfindung und Lösung dieser Aufgabe ist ein Verfahren zum Garen von Eiern, bei dem ein rohes Ei im elektromagnetischen Wechselfeld einer Spulenanordnung, die mindestens eine an einen Hochfrequenzgenerator angeschlossene Feldspule aufweist, induktiv erhitzt wird, wobei mit der von außen nach innen abnehmenden Stromdichteverteilung des im Ei induzierten Heizstroms eine durch Erhitzen verfestigte Hülle aus Eiweiß und ein erwärmter, noch weitgehend unverfestigter Kern aus Eigelb erzeugt wird. Die Induktionserhitzung beruht auf der Erzeugung von Wärme in einem leitfähigen Material, wenn dieses in ein rasch wechselndes elektromagnetisches Feld eingebracht wird. Hochfrequenz meint im Rahmen der Erfindung einen Frequenzbereich zwischen 1 und 1000 MHz, wobei vorzugsweise in einem Frequenzbereich zwischen 10 und 50 MHz gearbeitet wird. Die Erfindung nutzt aus, daß bei der, induktiven Erhitzung im hochfrequenten Wechselfeld die Stromdichteverteilung des induzierten Stromes von außen nach innen abnimmt. Folglich erfährt das Eiweiß eine wesentlich raschere und stärkere Aufheizung als das Eigelb. Im Ergebnis bleibt das Eigelb dem Ideal eines Frühstücksei entsprechend weitgehend unverfestigt, während das Eiweiß eine definierte Verfestigung durch Erhitzung erfährt, und zwar ohne Gefahr einer Stoffschädigung durch Überhitzung.

Wird die Hochfrequenzerhitzung in einem Feld aus im wesentlichen parallelen Feldlinien einer zylindrischen Feldspule durchgeführt, werden in Längsrichtung der Feldlinien betrachtet die Kappen des Eies kaum erwärmt. Durch Anpassung der Spulenformen sowie durch Verwendung geteilter Spulen, deren Feldlinien im Kappenbereich des Eies konzentriert werden, ist eine gleichmäßigere Aufheizung möglich. Aber auch dann, wenn mit einer zylindrischen Feldspule gearbeitet wird, kann das Verfahren so geführt werden, daß das gegarte Ei eine gleichmäßige, den Kern aus Eigelb vollständig kapselnde verfestigte Hülle aus Eiweiß besitzt. In weiterer Ausgestaltung lehrt die Erfindung, daß das Ei in einem Feld aus im wesentlichen parallelen Feldlinien einer zylindrischen Feldspule erhitzt und während der Hochfrequenzerhitzung um eine zu den Feldlinien orthogonale Achse gedreht oder geschwenkt wird. Durch die Schwenk- oder Drehbewegung werden die Kappen des Eies Feldbereichen ausgesetzt, in denen eine wirksame Aufheizung durch Induktion möglich ist. Eine alternative Ausführung, bei dem das Ei ebenfalls in einem Feld aus im wesentlichen parallelen Feldlinien einer zylindrischen Feldspule erhitzt wird, sieht vor, daß die Feldspule während der Hochfrequenzerhitzung um eine zu den Feldlinie orthogonale Achse Schwenkbewegungen um das Ei ausführt.

Gemäß einer bevorzugten Ausführung der Erfindung wird eine zweiteilige Feldspule verwendet, deren Spulenhälften in Reihe geschaltet sind und Felder mit gleichsinnigen Feldlinien erzeugen. Das Ei wird in einen von den Spulenhälften begrenzten Aufnahmeraum eingesetzt und erhitzt.

Eine weitere, ebenfalls bevorzugte Ausführung der Erfindung sieht vor, daß das Ei in einem Feld aus sich kreuzenden Feldlinien erhitzt wird, wobei das Ei etwa im Kreuzungsmittelpunkt der Feldlinienbündel positioniert wird. Das Feld wird von zwei rechtwinklig zueinander ausgerichteten Feldspulen erzeugt, wobei die Feldspulen zeitgleich oder innerhalb der Garzeit im Wechsel betrieben werden können. Eine oder beide Feldspulen können zweiteilig ausgebildet sein, wobei die eine Feldspule bildenden Spulenhälften in Reihe geschaltet sind und Felder mit gleichsinnigen Feldlinien erzeugen.

Eine gleichmäßige Erwärmung der Randzonen des Eies während der Hochfrequenzerhitzung kann dadurch gefördert werden, daß das Ei während der Hochfrequenzerhitzung durch oberseitige Aufgabe eines vorgeheizten Flüssigkeitsstromes mit Wasser benetzt wird. Zweckmäßig wird das zu garende Ei während der Hochfrequenzerhitzung mit Wasser berieselt, das in einem Vorratstank auf eine Temperatur nahe unterhalb der Siedetemperatur vorgeheizt worden ist. Zum Zwecke einer gleichmäßigen Benetzung empfiehlt es sich, das rohe Ei zunächst mit einem großen Flüssigkeitsmengenstrom zu beaufschlagen und den Flüssigkeitsmengenstrom nach einem Zeitintervall, welches wesentlich kürzer ist als die Garzeit, zu drosseln. Günstig ist die Aufgabe einer Flüssigkeitsmenge von 150 bis 450 ml pro Ei während der Garzeit. Nach Ablauf der Garzeit kann das Ei innerhalb des Aufnahmeraums der Spulenanordnung, in welchem die Hochfrequenzerhitzung erfolgte, durch Berieselung mit Kühlwasser abgeschreckt werden. Es versteht sich, daß der Verfahrensablauf bestehend aus der Zuschaltung des Hochfrequenzgenerators, aus der Aufgabe eines vorgeheizten Flüssigkeitsstromes und aus der Kühlwasserberieselung automatisiert und in einem geschlossenen Apparat durchgeführt werden kann.

Die erfindungsgemäß angewendete, induktive Hochfrequenzerhitzung hat den weiteren Vorteil, daß das Ei auf einem Eierbecher aus Kunststoff in den Aufnahmeraum der Spulenanordnung eingesetzt und nach dem Garen mit dem Eierbecher wieder entnommen werden kann. Das erleichtert die Handhabung eines nach dem erfindungsgemäßen Verfahren arbeitenden Gerätes.

Das erfindungsgemäße Verfahren zeichnet sich dadurch aus, daß innerhalb einer kurzen Garzeit von etwa 2 Minuten ein Frühstücksei gegart werden kann, welches eine stichfeste Eiweißhülle und einen heißen, aber noch weitgehend noch unverfestigten Kern aus Eigelb besitzt. Durch eine Zeitvorwahl innerhalb eines Zeitfensters von 1 bis 3 Minuten und/oder einer Leistungsvorwahl des Hochfrequenzgenerators können unterschiedliche Härtegrade für das zu garende Ei eingestellt werden. Die unterschiedlichen Härtegrade zeichnen sich dadurch aus, daß die Konsistenz der Eiweißhülle etwas weicher oder etwas fester ist. Stets ist bei dem erfindungsgemäßen Verfahren gewährleistet, daß der Kern aus Eigelb eine zähflüssige, weitgehend unverfestigte Konsistenz besitzt.

Im folgenden wird die Erfindung anhand einer lediglich ein Ausführungsbeispiel darstellenden Zeichnung erläutert. Es zeigen schematisch
- Fig. 1: eine Anordnung zum Garen von Eiern entsprechend der erfindungsgemäßen Lehre,
- Fig. 2: in einer vergrößerten Darstellung einen Ausschnitt aus Fig. 1 mit eingezeichneten Feldlinien, Bewegungsabläufen und einer Darstellung des sich einstellenden Temperaturprofils im Ei,
- Fig. 3: eine weitere Anordnung zur Durchführung des erfindungsgemäßen Verfahrens.

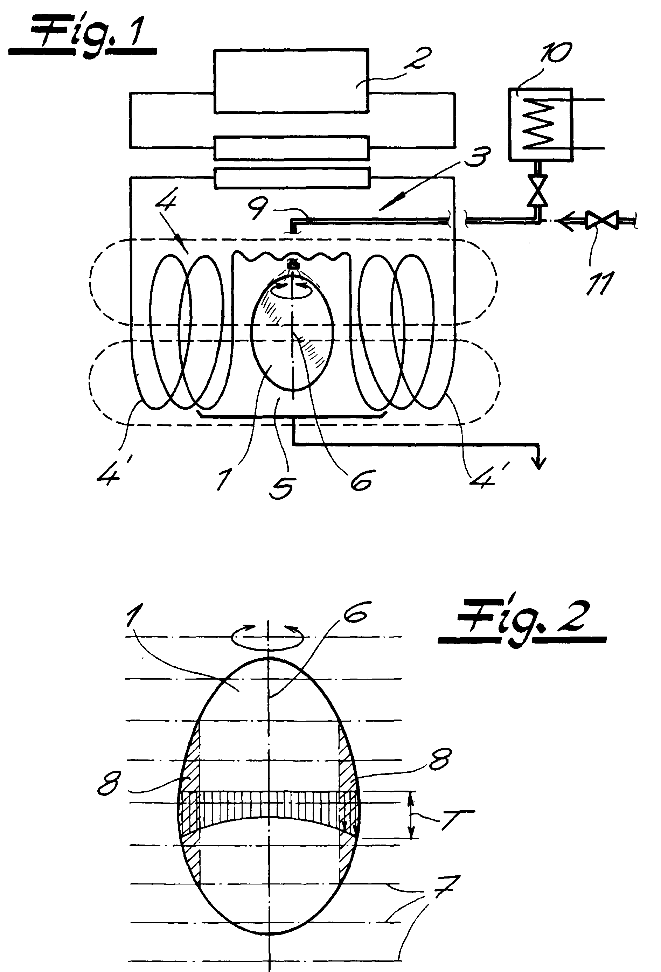

Die in Fig. 1 dargestellte Anordnung dient zum Garen eines rohen Eies 1 durch induktive Hochfrequenzerhitzung. Die Anordnung besteht in ihrem grundsätzlichen Aufbau aus einem Hochfrequenzgenerator 2 und einer Spulenanordnung 3, die eine an den Hochfrequenzgenerator 2 angeschlossene, zylindrische Feldspule 4 aufweist. Die Feldspule 4 ist im Ausführungsbeispiel zweiteilig ausgebildet. Die Spulenhälften 4' sind in Reihe geschaltet und erzeugen elektromagnetische Wechselfelder mit gleichsinnigen Feldlinien. Sie begrenzen einen Aufnahmeraum 5 für ein zu garendes Ei 1. Das Ei 1 wird in einem Feld aus im wesentlichen parallelen Feldlinien der zylindrischen Feldspule 4 erhitzt und während der induktiven Hochfrequenzerhitzung um eine zu den Feldlinien orthogonale Achse 6 geschwenkt. Die Feldlinien 7 sowie die Schwenkbewegungen des Eies 1 während des Garvorganges sind in Fig. 2 schematisch dargestellt.

In der Fig. 2 ist ferner die Temperaturverteilung T, die sich bei der induktiven Hochfrequenzerhitzung im Ei 1 einstellt, angedeutet. Mit der von außen nach innen abnehmenden Stromdichteverteilung ergibt sich ein starker Temperaturgradient von außen nach innen. Unter Ausnutzung der von außen nach innen abnehmenden Stromdichteverteilung des im Ei induzierten Heizstromes wird eine durch Erhitzen verfestigte Hülle aus Eiweiß und ein erwärmter, noch weitgehend unverfestigter Kern aus Eigelb erzeugt. Durch eine Drehbewegung des Eies 1 um dessen Mittelachse 6 während des Garvorganges werden die schraffiert angedeuteten Bereiche 8 des Eies in Feldbereiche mit größerer induktiver Wirkung bewegt, während der das Eigelb enthaltende Kern des Eies seine Position im wesentlichen unverändert in einem Feldbereich mit geringerer induktiver Wirkung beibehält. Im Ergebnis entsteht eine Hülle aus verfestigtem Eiweiß und einem zwar heißen, aber noch weitgehend unverfestigten Kern aus Eigelb.

Es versteht sich, daß dieselbe Wirkung auch erreicht werden kann, wenn die Feldspule während der Hochfrequenzerhitzung um eine zu den Feldlinien orthogonale Achse Dreh- oder Schwenkbewegungen um das Ei ausführt.

Während der Hochfrequenzerhitzung wird das Ei durch oberseitige Aufgabe eines vorgeheizten Flüssigkeitsstromes 9 mit Wasser benetzt. Das Wasser wird in einem Vorlagebehälter 10 auf eine Temperatur knapp unterhalb der Siedetemperatur vorgeheizt. Zum Zwecke einer gleichmäßigen Benetzung wird das rohe Ei 1 zunächst mit einem großen Flüssigkeitsmengenstrom beaufschlagt. Nach einem Zeitintervall, welches wesentlich kürzer ist als die Garzeit, wird der Flüssigkeitsmengenstrom gedrosselt. Die während der Hochfrequenzerhitzung insgesamt zugeführte Flüssigkeitsmenge an heißem Wasser beträgt zwischen 150 und 450 ml pro Ei. Nach Ablauf der Garzeit wird das Ei 1 innerhalb des Aufnahmeraumes 5 der Spulenanordnung, in welchem die Hochfrequenzerhitzung erfolgte, durch Berieselung mit Kühlwasser, das über eine Kühlwasserleitung 11 zugeführt wird, abgeschreckt.

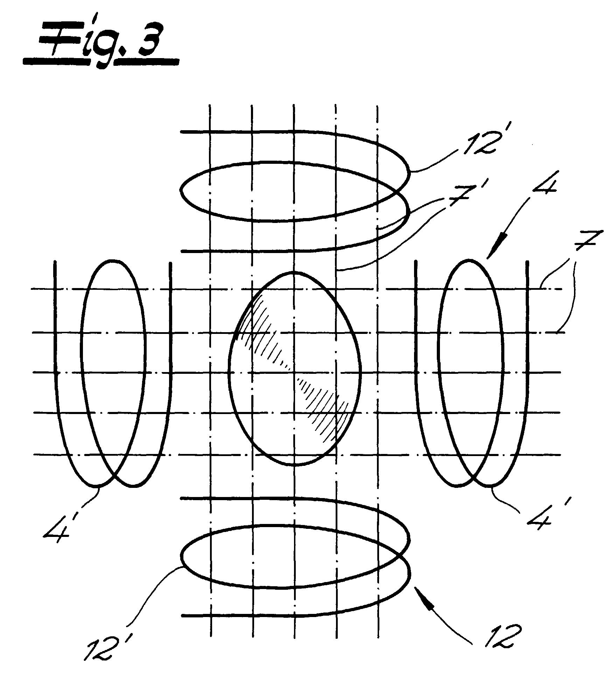

Bei der in Fig. 3 dargestellten Ausführung der Erfindung wird das Ei 1 in einem Feld aus sich kreuzenden Feldlinien 7, 7' erhitzt, wobei das Ei 1 etwa im Kreuzungsmittelpunkt der Feldlinienbündel 7, 7' positioniert wird. Das Feld wird von zwei rechtwinklig zueinander ausgerichteten Feldspulen 4, 12 erzeugt, die gleichzeitig oder innerhalb der Garzeit im Wechsel betrieben werden. Die Feldspulen können, wie in Fig. 3 schematisch dargestellt, zweiteilig ausgebildet sein, wobei ihre Spulenhälften (4' bzw. 12') in Reihe geschaltet sind und Felder mit gleichsinnigen Feldlinien erzeugen.

Für die induktive Hochfrequenzerhitzung kommt ein Frequenzbereich zwischen 1 und 1000 MHz in Betracht. Bevorzugt ist ein Frequenzbereich zwischen 10 und 50 MHz, wobei eine Frequenz von ca. 27 MHz sich als besonders günstig erweist. Geringere Frequenzen führen nach dem Induktionsgesetz zu einer höheren Strombelastung und/oder erfordern größere Induktivitäten der Feldspule, wobei die erforderliche Spannung sehr groß wird. Eine Variation der Frequenz nach oben führt bei Spulen zu verstärkter Abstrahlung, so daß die Abschirmung problematisch werden kann und spezielle Zulassungen erforderlich werden. Bei hohen Frequenzen um 1000 MHz kann die Welle in metallischen Hohlleitern geführt werden, die allerdings sehr große Abmessungen aufweisen und für die erfindungsgemäße Anwendung weniger vorteilhaft erscheinen.

Das erfindungsgemäße Verfahren ermöglicht kurze Garzeiten. Unter Verwendung eines Hochfrequenzgenerators für 27 MHz bei einer Abgabeleistung von 400 Watt wurde ein Hühnerei in zwei Minuten gegart. Während der Hochfrequenzerhitzung wurde das Ei mit ca. 300 ml heißem Wasser überströmt. Zur vollständigen Benetzung des Eies wurde das Wasser während der ersten 5 Sekunden mit einer Aufgabemenge von ca. 750 ml pro Minute überströmt. Anschließend wurde der Flüssigkeitsmengenstrom auf ca. 130 ml pro Minute gedrosselt. Das gegarte Ei besaß eine feste Hülle aus Eiweiß und einen noch weitgehend unverfestigten, heißen Kern aus Eigelb.

## Patentansprüche

1. Verfahren zum Garen von Eiern, bei dem ein rohes Ei (1) im elektromagnetischen Wechselfeld einer Spulenanordnung (3), die mindestens eine an einen Hochfrequenzgenerator (2) angeschlossene Feldspule (4) aufweist, induktiv erhitzt wird, wobei mit der von außen nach innen abnehmenden Stromdichteverteilung des im Ei (1) induzierten Heizstroms eine durch Erhitzen verfestigte Hülle aus Eiweiß und ein erwärmter, noch weitgehend unverfestigter Kern aus Eigelb erzeugt wird.

2. Verfahren nach Anspruch 1, bei dem das Ei (1) in einem Feld aus im wesentlichen parallelen Feldlinien (7) einer zylindrischen Feldspule (4) erhitzt und während der Hochfrequenzerhitzung um eine zu den Feldlinien (7) orthogonale Achse (6) gedreht oder geschwenkt wird.

3. Verfahren nach Anspruch 1, bei dem das Ei in einem Feld aus im wesentlichen parallelen Feldlinien einer zylindrischen Feldspule erhitzt wird, wobei die Feldspule während der Hochfrequenzerhitzung um eine zu den Feldlinien orthogonale Achse Schwenkbewegungen um das Ei ausführt.

4. Verfahren nach einem Ansprüche 1 bis 3, wobei eine zweiteilige Feldspule (4) verwendet wird, deren Spulenhälften (4') in Reihe geschaltet sind und Felder mit gleichsinnigen Feldlinien (7) erzeugen, und wobei das Ei (1) in einen von den Spulenhälften (4') begrenzten Aufnahmeraum (5) eingesetzt und erhitzt wird.

5. Verfahren nach Anspruch 1, bei dem das Ei (1) in einem Feld aus sich kreuzenden Feldlinien (7, 7') erhitzt wird, wobei das Ei (1) etwa im Kreuzungsmittelpunkt der Feldlinienbündel positioniert wird.

6. Verfahren nach Anspruch 5, wobei das Feld von zwei rechtwinklig zueinander ausgerichteten Feldspulen (4, 12) erzeugt wird, wobei die Feldspulen (4, 12) zeitgleich oder innerhalb der Garzeit im Wechsel betrieben werden.

7. Verfahren nach Anspruch 5 oder 6, wobei mindestens eine zweiteilige Feldspule (4, 12) verwendet wird, deren Spulenhälften (4, 12) in Reihe geschaltet sind und Felder mit gleichsinnigen Feldlinien erzeugen.

8. Verfahren nach einem der Ansprüche 1 bis 7, wobei das Ei (1) während der Hochfrequenzerhitzung durch oberseitige Aufgabe eines vorgeheizten Flüssigkeitsstroms (9) mit Wasser benetzt wird.

9. Verfahren nach Anspruch 8, wobei das rohe Ei zum Zwecke einer gleichmäßigen Benetzung zunächst mit einem großen Flüssigkeitsmengenstrom beaufschlagt wird und der Flüssigkeitsmengenstrom nach einem Zeitintervall, welches wesentlich kürzer ist als die Garzeit, gedrosselt wird.

10. Verfahren nach Anspruch 8 oder 9, wobei das Ei während der Hochfrequenzerhitzung mit einer Flüssigkeitsmenge von 150 bis 450 ml berieselt wird.

11. Verfahren nach einem der Ansprüche 1 bis 10, wobei das Ei (1) nach Ablauf der Garzeit innerhalb des Aufnahmeraums (5) der Spulenanordnung (3), in welchem die Hochfrequenzerhitzung erfolgte, durch Berieselung mit Kühlwasser (11) abgeschreckt wird.

12. Verfahren nach einem der Ansprüche 1 bis 11, wobei das Ei auf einem Eierbecher aus Kunststoff in den Aufnahmeraum der Spulenanordnung eingesetzt und nach dem Garen mit dem Eierbecher wieder entnommen wird.

13. Verfahren nach einem der Ansprüche 1 bis 12, wobei durch eine Zeitvorwahl innerhalb eines Zeitfensters von 1 bis 3 min. und/oder durch eine Leistungsvorwahl des Hochfrequenzgenerators unterschiedliche Härtegrade für das zu garende Ei eingestellt werden.
